# EUROPEAN PATENT APPLICATION

(11) **EP 3 417 927 A1**
(43) Date of publication of application: **26.12.2018**
(21) Application number: 17177558.8
(22) Date of filing: 23.06.2017
(51) Int. Cl.: B01D 53/86, F23J 15/02

(54) **SCR-SYSTEM FOR REMOVING ASH FROM A FLUE GAS STREAM GENERATED IN A COMBUSTION SYSTEM**

(71) Applicant: Yara International ASA, 0277 Oslo (NO)
(72) Inventor: RYBA, Manfred, 1210 Vienna (AT); ZOBL, Adi Johann Leopold, 1120 Vienna (AT)
(74) Representative: De Clercq & Partners

(57) **Abstract**

The application relates to an SCR (Selective Catalytic Reduction)-system for a combustion system having a combustion chamber and an arrangement of ducts in connection with the combustion chamber for conduction of a flue gas stream to an outlet, at least one duct being essentially vertically disposed, which SCR-system comprises an SCR-reactor comprising one or more SCR-catalyst layers each comprising one or more SCR-catalyst modules each comprising one or more SCR-catalysts arranged for reducing an amount of NOₓ in the flue gas stream, wherein the SCR-reactor is configured for operative and fitting placement within the vertical duct, and a filtering screen-unit comprising a filtering screen for filtering-out ash particles from the flue gas stream prior to entry into the one or more SCR-catalyst layers, wherein the filtering screen is arranged to protectively cover the SCR-reactor, and wherein the flue gas stream passes from an upper to a lower surface of the filtering screen, wherein the filtering screen-unit further comprises a vibration device in operative connection with the filtering screen, configured to actively vibrate the filtering screen. The application furthermore relates to such a combustion system and a method for retroactively fitting a system for reducing an amount of NOx in a flue gas stream to such a combustion system.

## Description

### Field of the application

The application relates to prolonging the active life time of an selective catalytic reduction (SCR)-reactor of an SCR-system that is provided to remove NOₓ from the flue gas stream that is produced in a combustion system having a combustion chamber and an arrangement of ducts in connection with the combustion chamber for conduction of the flue gas stream to an outlet, of which at least one duct is essentially vertically disposed, this by removing at least part of the ash from the flue gas stream before it reaches the SCR-reactor.

### Background of the application

In high temperature thermal processes performed in combustion systems, such as for instance power boilers, where steam is generated for the production in power plants or waste incinerators, flue gas streams are produced containing polluting components to the atmosphere such as nitrous oxides (NOₓ) and sulfur oxides (SOₓ) which must be removed from the produced flue gases before these are discharged into the environment.

The standard for removing nitrous oxides from flue gases is the SCR-process using an SCR-catalyst (also called a DeNOₓ catalyst), where a reducing agent, typically ammonia, is injected and mixed into the flue gases, and sent through a catalytic reactor where the catalyst facilitates the reduction of NOₓ using the reducing agent to form elemental nitrogen (N₂) and water.

The flue gases from the combustion processes furthermore typically contain fly ash particulates (also known as pulverised fuel ash) formed during the combustion process. This ash may stick together or in power boilers may stick to the heating surfaces of the different heat exchangers, or can even sinter together. If the combustion system is not running in full load, there can be accumulation of the ash due to lower velocity. If the load of the combustion system is then increased again, the ash may accumulate in the SCR catalyst or in or on various components of an SCR system. Ash that has been sticking together on a surface may crack and bigger particles can drop down. The ash can range from a fine powder to Large Particle Ash (LPA also known as "popcorn ash", from about 0.1 cm to about 2.5 cm), that can even further develop into large chunky pieces (from about 2.5 cm to about 13 cm or even larger), for instance when it accumulates in or on the SCR catalyst surface and passageways or on components of an SCR system. The various types of ash are formed in the combustion system and can easily be carried over into the SCR system causing accumulation and plugging of the various components of the SCR system. SCR systems typically are equipped with a plate or honeycomb-type catalyst and may have a pitch or opening ranging up to 8 millimetres. A part of the ash particles, and especially the LPA particles, are larger than the openings of the SCR catalyst. As a consequence, the SCR catalysts becomes plugged on the inlet grid and after longer operation times also between the plates in case of a plate type catalyst and in the channels in case of a honeycomb type catalyst. This may result in misdistribution of the flue gas, loss of catalytic performance through loss of available DeNOₓ, potential, unacceptable NH₃ slip, excessive pressure drop and catalyst erosion damage.

Therefore, the SCR system must frequently be cleaned using for instance soot blowers or ultrasound. Despite of the cleaning, the tendency for the channels of the SCR catalysts of the SCR system to become obstructed or clogged stays, and in particular in such a way that after a certain time period, the obstructions can no longer be removed with conventional cleaning methods.

Removal of ash from the flue gas may involve various technologies depending on the physical properties of the ash. The physical properties of the fly ash varies depending on the fuel type and the operating conditions in the thermal processes.

Fine powder ash may be removed using Electro Static Precipitators (ESP), which are typically installed upstream and/or downstream of the SCR system depending on the SCR arrangement, (i.e. high dust, low dust or tail end arrangement).

LPA can be collected prior to the SCR-reactor by means of LPA screens, which are typically located in the flue gas stream between the economizer outlet and the SCR inlet. These techniques however may not be sufficiently efficient to remove the ash in order to protect the SCR-catalyst(s) or the various components of the SCR system from plugging by or accumulation of fly ash particulates, which can lead to premature loss of SCR performance. For example, loose powder can plug channels of honeycomb-type and corrugated-type catalysts with individual channels becoming partially or fully inaccessible to flue gas. Furthermore, chunky fly ash particulates and LPA can deposit on top of the catalysts or on other components of the SCR-system, blocking the flue gas passage through honeycomb-, plate-, or corrugated-type SCR catalysts and access to the catalytic surfaces. Popcorn ash can travel into the channels of honeycomb, corrugated, or plate SCR-catalysts and deposit in the channel where it can become wedged between the channel walls, blocking flue gas flow and providing an environment for further fly ash particulates to accumulate and plug the channel.

Despite the above mentioned technologies, the ash removal may not be sufficient to protect the SCR-catalyst(s) or the various components of the SCR-system from plugging by or accumulation of fly ash particulates, which can lead to premature loss of SCR-performance. For example, loose powder can plug channels of honeycomb-type and corrugated-type catalysts with individual channels becoming partially or fully inaccessible to flue gas. Furthermore, chunky fly ash particulates and LPA can deposit on top of the catalyst(s) or on other components of the system, blocking the flue gas passage through honeycomb-, plate-, or corrugated-type SCR-catalysts and access to the catalytic surfaces. Popcorn ash can travel into the channels of honeycomb, corrugated, or plate SCR-catalysts and deposit in the channel where it can become wedged between the channel walls, blocking flue gas flow and providing an environment for further fly ash particulates to accumulate and plug the channel. The result can be a catalyst with pluggage ranging from 5% to 100% and reduced NOₓ removal efficiency. In addition, it is generally known in the regeneration of SCR-catalysts that the physical cleaning of the catalyst to remove any loose fly ash accumulated on the module frame, box frame, on top of the catalyst and within the various passageways of the catalyst, for example plugs within the catalyst channels, is an important step prior to a subsequent wet chemical based regeneration process.

Removal of fly ash plugs prior to wet-chemical regeneration ensures that loose, fly ash particulates are not carried into the treatment tanks or accumulate in the chemical solutions used during the regeneration processes where the fly ash particulates could potentially cause problems, such as plugged equipment, damaged equipment due to the abrasive effects of the fly ash and a reduced effectiveness of the chemicals in the process. Therefore, reducing the amount of loose fly ash particulates results in decreased discharge rates of chemical solutions, savings in chemical solutions, and preventing mechanical failures due to abrasive corrosion. Further, removal of the fly ash prior to wet-chemical treatment may also decrease the accumulation of catalyst poisons, such as iron, in the treatment tanks.

To address the problem, equipment manufacturers and utilities have experimented with various solutions with LPA screens, but, none appeared capable of performing satisfactorily in the long term.

In EP 1 146 286, a combustion system containing multiple ceramic filters is disclosed. One ceramic filter is placed inside the combustion chamber that acts as a barrier wall for the passage of LPA. A principle disadvantage is that LPA rebounding from the ceramic filter falls back into the combustion chamber, and onto the flame. This ash on top of the flame hinders the combustion process. Further, it must pass through the combustible material before it can be removed from the combustion chamber, which passage is clearly obstructed by the combustible material itself. Moreover, a ceramic filter located directly over the flame is exposed to extreme temperatures, limiting the choice of materials therefor. In the case of retrofitting, the combustion chamber is typically disposed with sensors and nozzles for the control of gases, rendering the chamber wall cutting and installation more technically challenging and expensive to avoid damage of ancillary parts.

US 2005/0061261 discloses a coal fired boiler that comprises a filtering screen that protects the SCR-catalysts from LPA. The filtering screen is pivotally attached to the connection between a horizontal duct and a vertical duct. A primary disadvantage is that it acts as a one-way flap-valve, and the force of the flue gas stream places the screen into an open configuration, thereby allowing the downstream passage of LPA. In the case of retrofitting, the system is installed in a dedicated loop that is attached to the combustion system. This makes retrofitting the SCR-system in an existing combustion system complex and will not always be possible due to space restrictions.

It is an aim of the invention to provide in a SCR-system that can be retrofitted in an existing combustion system and that with using a small amount of space so that the SCR-device can be retrofitted in combustion system with only limited space available. Another aim of the invention is to provide an SCR-system that influences the combustion process as little as possible. Still another aim of the invention is an SCR-system that does not cause any major differences in flow rate and pressure build-up of the flue gasses.

### Summary of the invention

According to a first aspect of the present application, an SCR (Selective Catalytic Reduction)-system for a combustion system having a combustion chamber and an arrangement of ducts in connection with the combustion chamber for conduction of a flue gas stream to an outlet, at least one duct being essentially vertically disposed, which SCR-system comprises:
- an SCR-reactor comprising one or more SCR-catalyst layers each comprising one or more SCR-catalyst modules each comprising one or more SCR-catalysts arranged for reducing an amount of NOₓ in the flue gas stream, the SCR-reactor being configured for operative and fitting placement within the vertical duct, and
- a filtering screen-unit comprising a filtering screen for filtering-out ash particles from the flue gas stream prior to entry into the one or more SCR-reactor wherein the filtering screen is arranged to protectively cover the SCR-reactor, and wherein the flue gas stream passes from an upper to a lower surface of the filtering screen,
wherein the filtering screen-unit further comprises a vibration device in operative connection with the filtering screen, configured to actively vibrate the filtering screen.

Vibrating refers to a regular displacement motion between two different positions, where a direction of motion (along the same path) changes during a cycle. Protectively cover means that the filtering screen unit is placed above the SCR-catalyst reactor. More specifically, a footprint of the filtering-screen unit is superimposed over a foot print of the SCR-reactor.

Such an SCR-system can be retrofitted in an existing combustion system and this with very limited space available in the existing duct system. The SCR-system according to the application will not cause heavy vibrations in the combustion system because only the filtering screen vibrates. Such an SCR-system furthermore does not cause the ash particles to fall back into the combustion chamber or to fall back into the flame, through which the SCR-system according to this application does not interfere with the combustion process. The active vibration of the filtering screen provides a constant clearance preventing build-up of ash on the filtering screen, and continually protects the SCR-catalyst(s).

The advantage of having an SCR-system that is not placed in the same duct as wherein the heat source is or the combustion chamber, is that the SCR-system is protected from the radiant heat coming from the heat source. Moreover, in most combustion systems, heat exchangers are present in the first duct, allowing the SCR-system that is placed in another duct to operate at a more moderate temperature. The more moderate temperatures allow a larger choice of materials suitable to build the SCR-system and are more suitable for the catalytic reaction to take place.

In a possible embodiment of an SCR-system according to the application, the filtering screen is positioned at an angle of 5.0 to 75.0°, possibly 5.5 to 60.0°, possibly 6.0 to 45°, possibly 7.0 to 35.0°, possibly 7.5 to 25.0°, possibly 7.5 to 20.0, possibly 10.0° or 15.0°, relative to a horizontal plane.

The advantage of the vibrating screen being installed under an angle as indicated above is that the SCR-system can be installed in a duct where limited space is available. Once the SCR-system is installed in a duct, the space required for the vibration of the filtering screen depends on the angle under which the screen needs to be installed. Due to the active vibration that is applied to the filtering screen, the angle can be kept as low as indicated above and therefore limited headspace is necessary above the SCR-system, much less than a passive system, wherein the angle needs to be large enough to cause the ash particles to be removed from the filtering screen by force of gravity only.

In an embodiment of an SCR-system according to the application, the filtering screen comprises a barrier having a plurality of apertures therein, the apertures having a diameter from 2 mm to 10 mm. More in particular, the apertures have a diameter of around 4 mm.

In a possible embodiment of an SCR-system according to the application, the filtering screen is formed from a mesh screen. The mesh screen more in particular can have a mesh size of between 2 mm and 10 mm. More in particular, the mesh size of the mesh screen is around 4 mm.

In an embodiment of an SCR-system according to the application, the at least one SCR-catalyst module comprises catalytic particles in a fixed bed. More in particular, all catalytic particles can be contained in a fixed bed.

In a possible embodiment of an SCR-system according to the application, the SCR-system further comprises an ash collector configured to receive the ash particles from the filtering screen. The ash collector may more in particular be positioned at the lowest point of the filtering screen so that the ash particles can roll of the upper surface of the filtering screen into the ash collector.

In an embodiment of an SCR-system according to the application, the ash collector comprises a conveyor, more in particular a chain conveyor or a conveyor belt.

In a particular embodiment of an SCR-system according to the application, the ash collector may be sealed from the atmosphere.

In a possible embodiment of an SCR-system according to the application, the vibration device comprises a motor or a sound transducer.

In an embodiment of an SCR-system according to the application, the combustion system is a power boiler or a waste incinerator.

According to a further aspect of the present application, a combustion system is disclosed that comprises a combustion chamber and an arrangement of ducts in connection with the combustion chamber for conduction of a flue gas stream to an outlet, at least one duct being essentially vertically disposed, provided in the vertical duct that is arranged with an SCR-system according to the application as described above.

In an embodiment of a combustion system according to the application, the combustion system is a power boiler or a waste incinerator.

In an embodiment where the combustion system is a power boiler, the combustion chamber is provided in a first vertical duct and the SCR-system is provided in a second vertical duct downstream the first vertical duct.

In an embodiment where the combustion system is a waste incinerator, the combustion chamber is provided in a first vertical duct and the SCR-system is provided in a third vertical duct downstream of the first vertical duct.

In a possible embodiment of a combustion system according to the application, the combustion system is further provided with a heat exchanger for extracting heat from the flue gas stream, wherein the SCR-system is disposed downstream of the heat exchanger.

According to another aspect of the present application, a method is described for retroactively fitting a system for reducing an amount of NOx in a flue gas stream to a combustion system having a combustion chamber and an arrangement of ducts in connection with the combustion chamber for conduction of the flue gas stream to an outlet, at least one duct being essentially vertically disposed, comprising the step of installing an SCR-system according to the present application as described above in the vertical duct.

### Brief description of the figures

FIG. 1 shows a schematic view of a power boiler which is provided with an SCR system provided in the second boiler draft and arranged with a filtering screen-unit to remove ash from the flue gas conducted through the flue gas ductwork of the power boiler according to the present application;

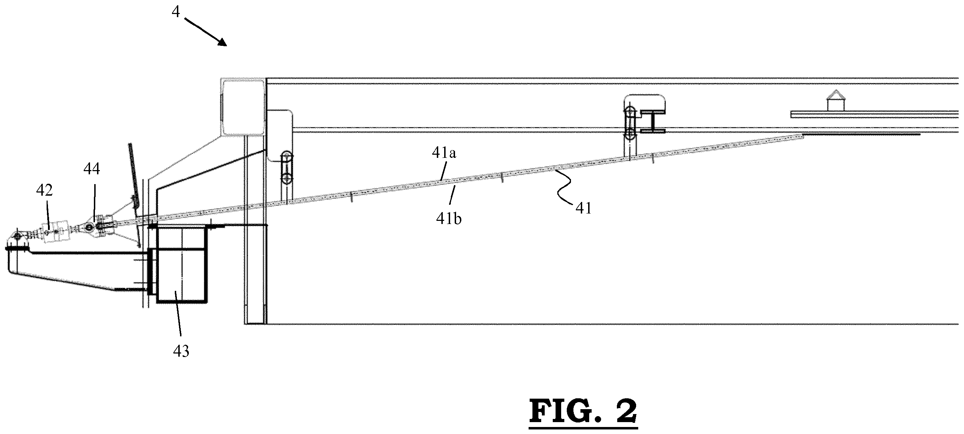

FIG. 2 shows a cross-section of an embodiment of a filtering screen-unit according to the application.

### Detailed description of the invention

The application relates to an SCR (Selective Catalytic Reduction)-system for a combustion system and a combustion system. A combustion system in general is provided with a combustion chamber and an arrangement of ducts that are in connection with the combustion chamber for conduction of a flue gas stream to an outlet. At least one of the ducts is essentially vertically disposed. This vertical duct is different from a duct containing the combustion chamber.

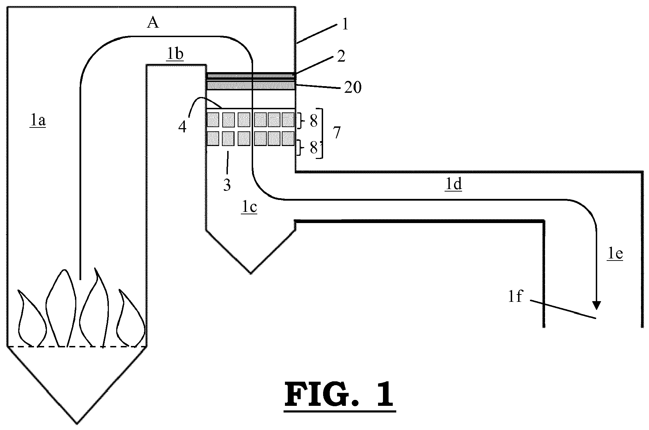

In FIG. 1, a combustion system in the form of a power boiler (1) is shown as an exemplary embodiment. It must be noted that this exemplary embodiment is not limitative to the scope of the application. The application is also applicable to a waste incinerator.

In the power boiler (1) as shown in FIG. 1, the combustion chamber for burning fossil fuel is arranged in a first vertical duct (1a). Downstream the first vertical duct (1a), a second vertical duct (1c) is provided including one or more heat exchangers (2). This second vertical duct (1c) is connected to the first vertical duct (1a) via a third horizontal duct (1b). The heat exchangers (2) that are provided in the second vertical duct (1c) contain more specifically economizers which are heat exchange devices that heat fluids, usually water, up to, but normally not beyond the boiling point of that fluid. Economizers are so named because they can make use of the enthalpy in fluid streams that are hot, but not hot enough to be used in a boiler, thereby recovering more useful enthalpy and improving the boiler's efficiency. It are devices fitted to the power boiler (1) which save energy by using the exhaust gases from the power boiler (1) to preheat the cold water circulating therein. The economizer(s) (2) are supported by a supporting beam (20). The second duct (1c) is connected with a vertical exit duct (1e) of the power boiler (1) through a fourth horizontal duct (1d). Through the combustion of the fossil fuel, a flue gas stream (A) is produced that travels through the different ducts (1a - 1e) of the power boiler (1) and finally exits the power boiler (1) through an outlet (1f) arranged in the exit duct (1e).

An SCR-reactor (7) is positioned downstream of the combustion chamber in the second vertical duct (1c). The SCR-reactor (7) forms part of an SCR-system further comprising amongst others means for ammonia injection, a heat exchanger if necessary, a mixer, dilution air. An SCR-reactor (7) comprises one or more SCR-catalyst layers (8, 8') that are located in a housing, for instance a steel housing. Each of the SCR-catalyst layers (8, 8') comprises one or more SCR-catalyst modules (3). In case of a plurality of SCR-catalyst modules (3), these are arranged side-by-side on the same elevation. An SCR-catalyst module (3) comprises a plurality of single SCR-catalysts assembled in a frame, for instance a steel frame. In the presence of heat exchangers (2), the SCR-reactor (7) is more in particular positioned downstream these heat exchangers (2). Heat exchangers (2) are used in case the temperature of the flue gas is not sufficiently high to convert the oxides of nitrogen (NOx) catalytically. The heat exchangers (2) then heat the flue gas to a temperature of 220°C - 320°C.

The SCR-reactor (7) is configured for operative and fitting placement within the second vertical duct (1c), more specifically, it is configured for fitting exclusively (only) within a void space of the second vertical duct (1c). The SCR-reactor (7) is dimensioned essentially for occlusion of the second vertical duct (1c). It is remarked that for instance in a waste incinerator, the SCR-system can be positioned in a third vertical duct that is downstream the first vertical duct. Each of the SCR-catalyst modules comprises catalytic particles in a fixed bed.

During the combustion of the fossil fuel, amongst others (fly) ash is produced that is carried along with the flue gas stream. As used herein, the term "ash" refers to solid-phase combustion by-products including from a fine powder to Large Particle Ash (LPA also known as "popcorn ash", having a particle size from 0.1 cm to about 2.5 cm), which can even develop further into large chunk pieces (having a particle size from about 2.5 cm to about 13 cm or even larger). In order to remove the ash from the flue gas that is conducted throughout the second vertical duct (1c) to protect the SCR system against fouling and clogging, a filtering screen unit (4) is arranged upstream the SCR-reactor (7).

The filtering screen unit (4) comprises a filtering screen (41) for filtering-out ash particles from the flue gas stream prior to entry into the SCR-reactor (7). The filtering screen (41) is thus configured to protectively cover the SCR-reactor (7). More in particular, the filtering screen (41) is extending above the upper SCR-catalyst layer (8) from the SCR-catalyst layers (8, 8') of the SCR-reactor (7).

A filtering screen (41) is provided with an upper and a lower surface (41a, 41b). The flue gas stream passes through a filtering screen (41) from the upper surface (41a) to the lower surface (41b) thereof. The filtering screen (41) is disposed at an incline to a horizontal plane. The filtering screen (41) can be positioned at an angle of 5.0 to 75.0° relative to a horizontal plane, in particular 5.5 to 60.0°, more in particular 6.0 to 45°, even more in particular 7.0 to 35.0°, still more in particular 7.5 to 25.0°, most in particular 7.5 to 20.0, like 10.0° or 15.0°, relative to a horizontal plane.

The filtering screen (41) comprises a barrier having a plurality of apertures therein to prevent the ash from passing through the filtering screen (41). The apertures more in particular have a diameter from 2 to 10mm, more in particular having a diameter of around 4 mm. The filtering screen (41) can be formed from one or more mesh screens. In that case, the mesh size is more in particular between 2 and 10 mm and more in particular around 4 mm. The filtering screen (41) may have a cross-section of 50% which allows for undisturbed flow of fly ash and retaining the bigger ash particles which cannot get through the SCR-catalysts. The filtering screen (41) can be made out of stainless steel.

The filtering screen unit (4) furthermore comprises a vibration device (42) that is in operative connection with the filtering screen (41) and that is configured to actively vibrate this filtering screen (41). The vibrating device (42) applies vibration, optionally continuous, to the filtering screen (41) such that the filtered ash is agitated downwards across the upper surface (41a) of the inclined filtering screen (42) for collection. The vibration frequency of the filtering screen (41) may be between 5 Hz and 6,25 Hz. More in particular, the frequency of the filtering screen (41) may be around 5,4 Hz. The vibration device (42) may comprise a motor or a sound transducer.

To collect the ash particles that are vibrated downwards from the filtering screen (42), an ash collector (43) is arranged. The ash collector (43) can be sealed from the atmosphere. The ash collector (43) can comprise a conveyor, more in particular a chain or screw conveyor or a conveyor belt. The ash collector (43) can be in connection with any kind of ash collecting system (not shown in the figures). It is for instance possible to connect the ash collector (43) with a vertically positioned duct or pipe system (not shown on the figures) at the end of the ash collector (43) and into which the collected ash falls down by gravity and also because the pressure is higher there. The lower end of the duct / pipe system can be connected with the lower SCR-catalyst layer (8'). The duct / pipe thus serves as a kind of bypass over the SCR-catalyst layers (8, 8'). It is remarked that it is also possible to place the ash collector (43) and the pipe / duct inside the SCR-reactor (7).

In order to safely absorb the heat-induced expansion and contraction of the different parts of the system, to absorb the vibration of the vibration device (42) and to hold the parts of the system together, an expansion joint (44) can be provided between the vibration device (42) and the filtering screen (41).

The application also relates to a method for retroactively fitting a system for reducing an amount of NOx in a flue gas stream to a combustion system having a combustion chamber and an arrangement of ducts in connection with the combustion chamber for conduction of the flue gas stream to an outlet. At least one duct is essentially vertically disposed. The method comprises the step of installing an SCR-system (7) as disclosed above in the vertical duct. The combustion chamber is more in particular disposed in a first vertical duct (1a), and the SCR-system can be installed in the second (1c) or third vertical duct downstream the first vertical duct.

## Claims

1. SCR (Selective Catalytic Reduction)-system for a combustion system having a combustion chamber and an arrangement of ducts in connection with the combustion chamber for conduction of a flue gas stream to an outlet, at least one duct being essentially vertically disposed, which SCR-system comprises:
- an SCR-reactor comprising one or more SCR-catalyst layers each comprising one or more SCR-catalyst modules each comprising one or more SCR-catalysts arranged for reducing an amount of NOₓ in the flue gas stream, the SCR-reactor being configured for operative and fitting placement within the vertical duct, and
- a filtering screen-unit comprising a filtering screen for filtering-out ash particles from the flue gas stream prior to entry into the one or more SCR-reactor wherein the filtering screen is arranged to protectively cover the SCR-reactor, and wherein the flue gas stream passes from an upper to a lower surface of the filtering screen,
wherein the filtering screen-unit further comprises a vibration device in operative connection with the filtering screen, configured to actively vibrate the filtering screen.

2. SCR-system according to claim 1, wherein the filtering screen is positioned at an angle of 5.0 to 75.0° relative to a horizontal plane.

3. SCR-system according to claim 1 or 2, wherein the filtering screen comprises a barrier having a plurality of apertures therein, the apertures having a diameter from 2 mm to 10 mm.

4. SCR-system according to any one of claims 1 to 3, wherein the filtering screen is formed from one or more mesh screens, more in particular having a mesh size of between 2 and 10 mm.

5. SCR-system according to any one of claims 1 to 4, wherein the at least one SCR-catalysts comprise catalytic particles in a fixed bed.

6. SCR-system according to any one of claims 1 to 5, wherein the SCR-system comprises an ash collector configured to receive the ash particles from the filtering screen.

7. SCR-system according to claim 6, wherein the ash collector comprises a conveyor.

8. SCR-system according to claim 6 or 7, wherein the ash collector is sealed from the atmosphere.

9. SCR-system according to any of previous claims, wherein the vibration device comprises a motor or a sound transducer.

10. SCR-system according to any of the previous claims, wherein the combustion system is a power boiler or a waste incinerator.

11. Combustion system comprising a combustion chamber and an arrangement of ducts in connection with the combustion chamber for conduction of a flue gas stream to an outlet, at least one duct being essentially vertically disposed, provided in the vertical duct that is arranged with an SCR-system according to any of claims 1 to 10.

12. Combustion system according to claim 11, that is a power boiler, preferably a power boiler wherein the combustion chamber is provided in a first vertical duct and the SCR-system is provided in a second vertical duct downstream of the first vertical duct, or a waste incinerator, preferably a waste incinerator wherein the combustion chamber is provided in a first vertical duct and the SCR-system is provided in a third vertical duct downstream of the first vertical duct.

13. Combustion system according to any of claims 11 to 12, further provided with a heat exchanger for extracting heat from the flue gas stream, wherein the SCR-system is disposed downstream of the heat exchanger.

14. Method for retroactively fitting a system for reducing an amount of NOx in a flue gas stream to a combustion system having a combustion chamber and an arrangement of ducts in connection with the combustion chamber for conduction of the flue gas stream, to an outlet at least one duct being essentially vertically disposed, comprising the step of installing an SCR-system according to any of claims 1 to 10 in the vertical duct.

15. Method according to claim 14, wherein the combustion chamber is disposed in a first vertical duct and the SCR-system is installed in a second or third vertical duct downstream of the first vertical duct.
